Europäisches Patentamt

(19) **European Patent Office**

**Office européen des brevets**

(11) Numéro de publication: **0 011 574**
**B1**

(12) # FASCICULE DE BREVET EUROPEEN

(45) Date de publication du fascicule du brevet: **13.04.83**

(21) Numéro de dépôt: **79400879.7**

(22) Date de dépôt: **16.11.79**

(51) Int. Cl.³: **G 01 S 15/88,**
**G 01 S 15/66,**
**G 01 B 17/00, B 63 B 9/00**

(54) **Procédé et dispositif pour le repérage en position d'un engin autonome mobile sur une structure immergée.**

(30) Priorité: **17.11.78 FR 7832466**

(43) Date de publication de la demande:
**28.05.80 Bulletin 80/11**

(45) Mention de la délivrance du brevet:
**13.04.83 Bulletin 83/15**

(84) Etats contractants désignés:
**DE GB IT NL**

(56) Documents cités:
**FR - A - 2 416 808**
**GB - A - 1 444 752**
**US - A - 3 222 634**
**US - A - 3 336 572**
**US - A - 3 383 651**
**US - A - 3 757 285**

**NAVY TECHNICAL DISCLOSURE BULLETIN, Vol.**
**1, no. 1, mai 1976, Case no. 59986**
**Washington, DC, US**
**TALKINGTON: "Remotely operated hull**
**inspection vehicle", pp. 71—75**

(73) Titulaire: **SOTRAPLEX Société Anonyme**
**553 Boulevard Jules Durand**
**F-76064 Le Havre (FR)**

(72) Inventeur: **Poupel, Pierre**
**56 Bd Albert 1er**
**F-76600 Le Havre (FR)**
Inventeur: **Le Rolland, Patrick**
**14 Rue Jacques Prevert**
**F-76290 Montivilliers (FR)**
Inventeur: **Faure, Alain**
**18 Rue du Docteur Ducastel**
**F-76290 Montivilliers (FR)**

(74) Mandataire: **Foldes, Georges et al,**
**CABINET BONNET THIRION 95 Bd Beaumarchais**
**F-75003 Paris (FR)**

Courier Press, Leamington Spa, England.

Procédé et dispositif pour le repérage en position d'un engin autonome mobile
sur une structure immergée

La présente invention concerne d'une manière générale le repérage en position d'un engin autonome, dit ci-après par commodité engin opérateur, appelé à se déplacer sur une structure immergée, en particulier la coque d'un navire à flot, par exemple pour le contrôle de celle-ci.

Comme on le sait, l'obtention d'un certificat de navigabilité pour un navire, et son maintien, sont en effet soumis à un contrôle rigoureux de la coque de ce navire, dans le but d'en vérifier en tout point certaines caractéristiques, et en particulier l'état de son revêtement protecteur, l'avancement de la corrosion dont elle peut être l'objet, la nature et l'amplitude des déformations de tôle qu'elle est susceptible de présenter, notamment à la suite d'un échouage, et son épaisseur.

Comme on le sait également, ces vérifications sont usuellement faites à ce jour en cale sèche, les experts des organismes officiels habilités à les exécuter y inspectant minutieusement, mètre carré par mètre carré, les coques de navire qui leur sont présentées.

Il s'agit d'une sujétion importante, grevant lourdement les frais d'entretien d'un navire.

Cet inconvénient se trouve majoré pour les navires de fort tonnage, qu'il s'agisse de pétroliers, de minéraliers ou de porte-conteneurs par exemple, car il conduit pour ceux-ci à des passages en forme de radoub de moins en moins compatibles avec leur gigantisme, le manque d'équipement des grands ports marchands en forme de radoub susceptibles de les recevoir, et leur coût propre d'immobilisation.

Dans la publication FR—A—2 373 054, il a été proposé un procédé, une installation et un chariot permettant d'éviter cet inconvénient.

Le chariot qui y est décrit est apte à se déplacer à la surface de la structure immergée à contrôler, et il est porteur d'un capteur, une caméra de télévision par exemple, relié en circuit fermé à un récepteur disposé en surface, et propre à donner sur ce récepteur une image de la surface qu'il balaye.

Il est ainsi possible d'effectuer à terre les multiples vérifications auxquelles doit être soumise la coque d'un navire, alors que celui-ci est lui-même à flot, et donc sans le faire passer de manière dispendieuse en cale sèche.

Mais pour que le contrôle ainsi effectué ait toute la rigueur convenable, il importe que le chariot, ou engin opérateur, mis en oeuvre, soit à tout instant très exactement repéré en position sur la surface qu'il parcourt, notamment pour permettre, par exemple, la comparaison entre eux des relevés effectués par le capteur qu'il porte lors de visites règlementaires successives.

La présente invention a d'une manière générale pour objets un procédé et un dispositif propres à un tel repérage.

Suivant l'invention, l'engin opérateur étant mobile suivant une ligne de déplacement quelconque, on lui associe un engin suiveur, on repère à tout instant la position longitudinale de cet engin suiveur le long d'une ligne de déplacement choisie comme ligne de référence, on établit un asservissement relatif en déplacement longitudinal de l'engin opérateur et de l'engin suiveur le long de leurs lignes de déplacement respectives, et on relève à tout instant la distance transversale entre ces engins.

Ainsi, l'engin opérateur se trouve à tout instant localisé dans un système de coordonnées globalement rectangulaires, la ligne de déplacement de référence de l'engin suiveur formant par exemple l'axe des abscisses de ce système, et la distance transversale entre les engins concernés fournissant à tout instant l'ordonnée correspondante de l'engin opérateur.

Les caractéristiques et avantages de l'invention ressortiront d'ailleurs de la description qui va suivre, à titre d'exemple, en référence aux dessins schématiques annexés sur lesquels:

la figure 1 est une vue en perspective d'un navire, vu en biais par dessous, au contrôle de surface duquel sont appliqués, suivant l'invention, un engin opérateur et un engin suiveur;

la figure 2 est, à échelle supérieure, une vue en coupe transversale, suivant la ligne II—II de la figure 1, montrant plus en détail l'engin suiveur suivant l'invention;

la figure 3 est une vue en élévation de cet engin suiveur, suivant la flèche III de la figure 2;

la figure 4 est un bloc diagramme illustrant en plan la mise en oeuvre de l'engin opérateur et de l'engin suiveur suivant l'invention;

la figure 5 est un schéma fonctionnel de l'asservissement en déplacement intervenant entre ces engins;

la figure 6 est un schéma bloc plus détaillé illustrant cet asservissement;

la figure 7 est un diagramme des signaux correspondant à la réalisation d'un tel asservissement;

la figure 8 est un schéma d'un premier mode de réalisation possible d'un des constituants de la chaîne d'asservissement susceptible d'être mis en oeuvre;

la figure 9 est un autre schéma de réalisation possible pour le constituant en question.

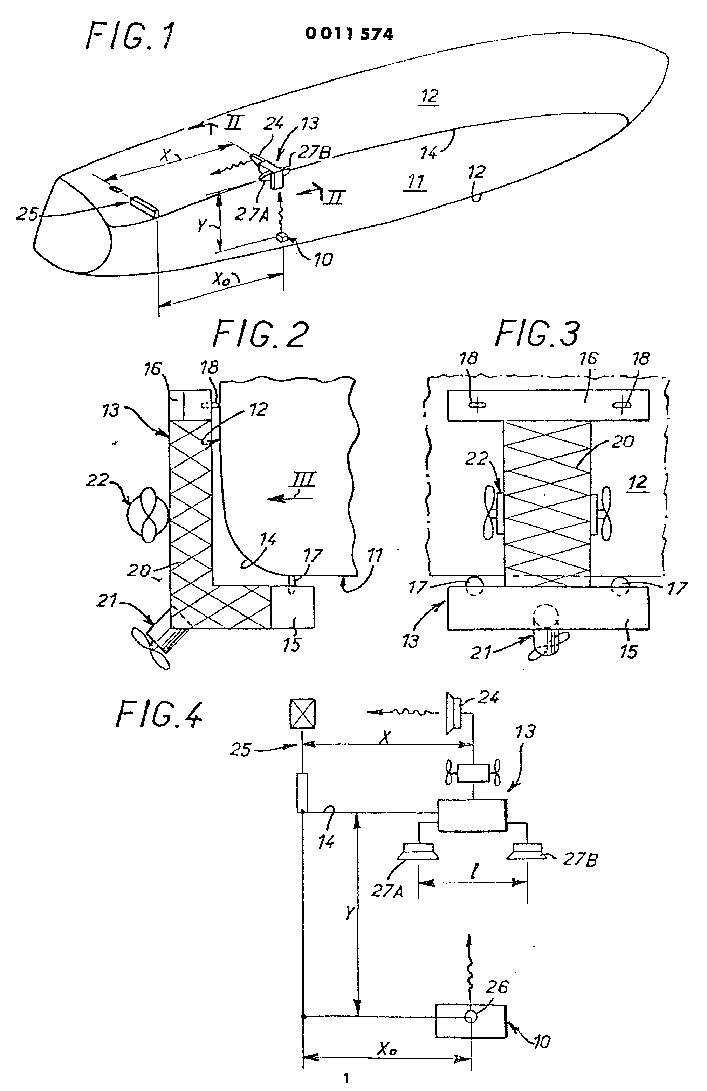

Tel qu'illustré à titre d'exemple à la figure 1, l'invention est appliquée au contrôle de surface de la coque d'un navire, supposé à flot.

Suivant des modalités du type de celles décrites par exemple dans la publication FR—A—2 373 054 mentionnée ci-dessus, ce contrôle est conduit à l'aide d'un chariot 10, apte à se déplacer sur la surface à contrôler, et porteur d'un capteur propre au contrôle à

effecteur.

Ce chariot, ou engine opérateur, ne fait pas partie de la présente invention, et il ne sera donc pas décrit en détail ici.

Seuls en seront indiqués les éléments nécessaires à la mise en oeuvre de l'invention.

Dans l'exemple de mise en oeuvre représenté, l'engin opérateur 10 est appliqué au contrôle de surface du fond 11 du navire concerné.

Il va de soi cependant qu'il pourrait aussi bien être appliqué au contrôle de surface de l'une quelconque des murailles 12 de ce navire.

Quoi qu'il en soit, suivant l'invention, on associe à l'engin opérateur 10 un engin suiveur 13 appelé à se déplacer suivant une ligne de déplacement choisi comme ligne de référence.

Dans l'exemple de mise en oeuvre représenté, on choisit pour ligne de référence pour l'engin suiveur 13, l'intersection entre le font 11 du navire concerné et l'une des murailles 12 de celui-ci, cette intersection étant supposée constituer une arête 14 sur la figure 1; en réalité, et comme illustré sur la figure 2, il s'agit d'un large congé de raccordement dont la ligne médiane est supposée constituer l'arête 14.

Dans un tel cas, l'engin suiveur 13 est adapté suivant l'invention à s'appliquer simultanément aux deux surfaces de déplacement que constituent conjointement le fond 11 du navire et la muraille 12 concernée de celui-ci.

Ces deux surfaces de déplacement formant entre elles un dièdre, et en pratique un dièdre sensiblement droit, l'engin suiveur suivant l'invention a globalement, vu en élèvation de côté, figure 2, une configuration en dièdre complémentaire, et donc, en pratique, une configuration en L.

Par exemple, et tel que représenté, cet engin suiveur 13 peut comporter deux longerons parallèles 15, 16, qui sont chacun dotés d'organes de roulement 17, 18 par lesquels ils sont adaptés à porter respectivement sur le fond 11 et la muraille 12 du navire, et qui sont transversalement reliés l'un à l'autre par une poutre médiane en treillis 20 ayant, en élévation de côté, une configuration en L.

La réalisation détaillée d'un tel engin suiveur 13 ne sera pas donnée ici; elle ne fait pas partie de la présente invention et relève simplement de l'homme de métier.

Il suffira de préciser que cet engin suiveur 13 est doté d'une part d'un moteur auxiliaire d'application 21 porté obliquement, suivant son dièdre, par la poutre en treillis 20, et d'autre part de moyens principaux de propulsion 22, portés transversalement par cette poutre, parallèlement aux longerons 15, 16.

Dans l'exemple de réalisation représenté, ces moyens de propulsion 22 sont constitués par un moteur unique, à deux sens de rotation, aux extrémités de l'arbre duquel sont calées chacune respectivement deux hélices établies de manière à ce que leurs effets se conjuguent.

En variante, il peut être envisagé la mise en oeuvre de deux moteurs distincts, chacun commandant individuellement une hélice, l'une pour un premier sens de propulsion, l'autre pour le sens de propulsion opposé.

Quoi qu'il en soit, l'engin opérateur 10 étant supposé se déplacer sur le font 11 du navire suivant une ligne de déplacement quelconque, le dispositif mis en oeuvre suivant l'invention pour en repérer à tout instant la position sur ce fond 11 comporte, outre l'engin suiveur 13, des moyens de détection propres à relever la position longitudinale de l'engin suiveur sur sa ligne de déplacement choisie pour ligne de référence 14, des moyens d'asservissement relatifs propres à lier en déplacement l'engin suiveur 13 et l'engin opérateur 10 le long de leurs lignes de déplacement respectives, et des moyens de détection propres à relever la distance transversale entre l'engin opérateur 10 et l'engin suiveur 13.

En effet, et tel qu'illustré par les figures 1 et 3, l'engin opérateur 10 peut ainsi être repéré à tout instant dans un système d'axes de coordonnées rectangulaires, la ligne de référence 14 formant l'axe des abscisses de ce système: l'engin suiveur 13 étant suivant l'invention maintenu systématiquement au droit de l'engin opérateur 10, selon des modalités décrites ci-après, la position X de ce chariot suiveur 13 sur la ligne de référence 14, repérée à compter d'un point quelconque de cette ligne de référence choici pour point origine, fournit à tout instant l'abscisse $X_0$ de l'engin opérateur 10, et la distance transversale de ce dernier à l'engin suiveur 13 en fournit l'ordonnée Y.

Dans l'exemple de réalisation représenté, les moyens de détection mis en oeuvre pour relever la position longitudinale de l'engin suiveur 13 sur la ligne de référence 14 comporte, d'une part un transducteur ultra-sonore 24 porté par cet engin suiveur 13 et monté en émetteur-récepteur, et d'autre part un réflecteur 25 porté par le navire concerné, ce réflecteur, qui est par exemple un réflecteur triplan, étant de préférence placé au point de la ligne de déplacement 14 choisi comme point origine, et étant orienté de manière à ce que les impulsions ultra-sonores émises par le transducteur 24 soient renvoyées vers celui-ci.

De manière connue en soi, le temps de propagation aller retour de ces impulsions ultra-sonores, qui sont par exemple émises sous forme de rafales de sinusoïdes, permet de déterminer à tout instant l'abscisse X de l'engin suiveur 13.

Conjointement, les moyens d'asservissement mis en oeuvre pour lier en déplacement l'engin suiveur 13 et l'engin opérateur 10 le long de leurs lignes de déplacement respectives, comportant, dans l'exemple de réalisation représenté, un transducteur ultra-sonore 26, porté par l'engin opérateur 10, et monté en émetteur, et en pratique, pour des raisons qui apparaitront ci-après, également en récepteur, et deux transducteurs ultrasonores 27A, 27B, montés en dipôle sur l'engin suiveur 13, parallèlement à la ligne de déplacement 14 de celui-ci, et montés chacun en récepteur.

Dans un tel cas, et à titre d'exemple, c'est donc l'engin suiveur 13 qui est asservi en déplacement ou poursuite, à l'engin opérateur 10.

Lorsque l'engin suiveur 13 est exactement au droit de l'engin opérateur 10, ses transducteurs 27A, 27B reçoivent simultanément les impulsions sonores émises par le transducteur 26 de l'engin opérateur 10.

Par contre, si l'engin suiveur 13 est en avance, ou en retard, par rapport à l'engin opérateur 10, il y a nécessairement un écart de temps d'arrivée, ou de niveau, entre les signaux, ou impulsions sonores, reçus par les transducteurs 27A, 27B de cet engin suiveur en provenance du transducteur 26 de l'engin opérateur 10.

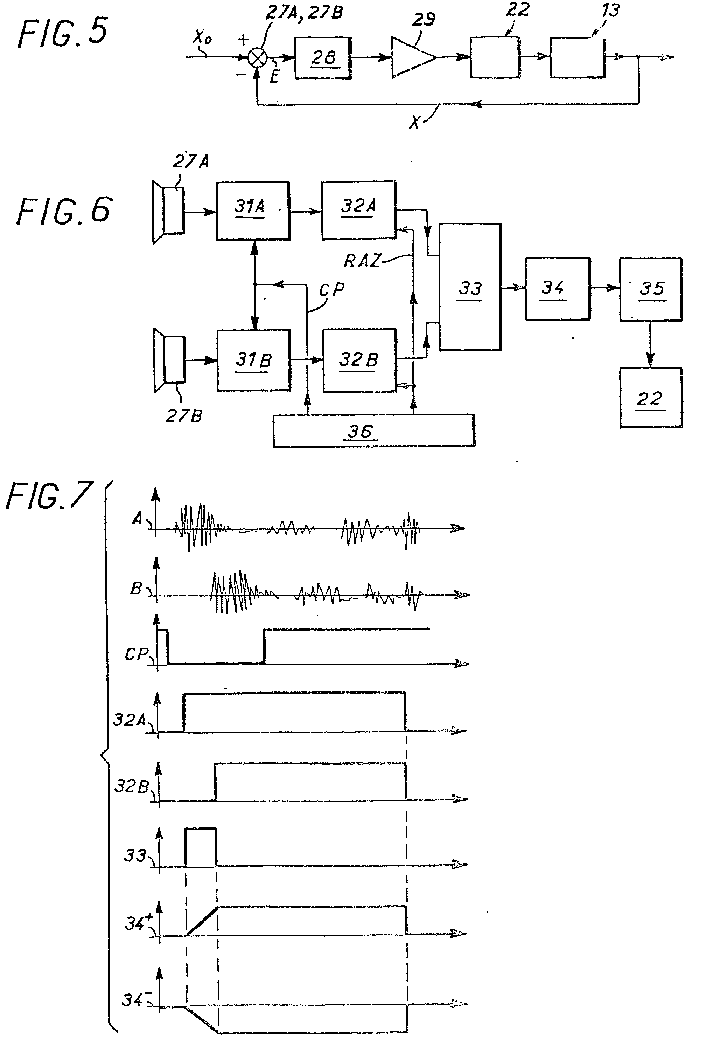

C'est cet écart qui est mis en oeuvre pour piloter, suivant le schéma fonctionnel de la figure 5, une chaîne électromécanique d'asservissement, dont le dipôle constitué par les transducteurs 27A, 27B de l'engin suiveur 13 constitue le capteur d'entrée.

Tout se passe comme si, tel qu'illustré par le schéma de la figure 5, le dipôle constitué par les transducteurs 27A, 27B reçoit, d'une part, l'abscisse $X_0$ à un instant donné de l'engin opérateur 10 et l'abscisse X à ce même instant de l'engin suiveur 13, et élabore l'écart E entre ces abscisses.

Cet écart, traité en 28 et amplifié en 29, est appliqué au moteur de propulsion 22 de l'engin suiveur 13, dont l'abscisse X évolue en conséquence, cette abscisse étant alors appliquée en retour sur le capteur d'entrée que constituent conjointement les transducteurs 27A, 27B de cet engin suiveur 13.

Ainsi, globalement, les moyens de propulsion dont est doté l'engin suiveur 13 sont pilotés par des moyens de commande sensibles à l'écart éventuel de temps d'arrivée ou de niveau entre les signaux reçus par les transducteurs récepteurs que porte cet engin suiveur.

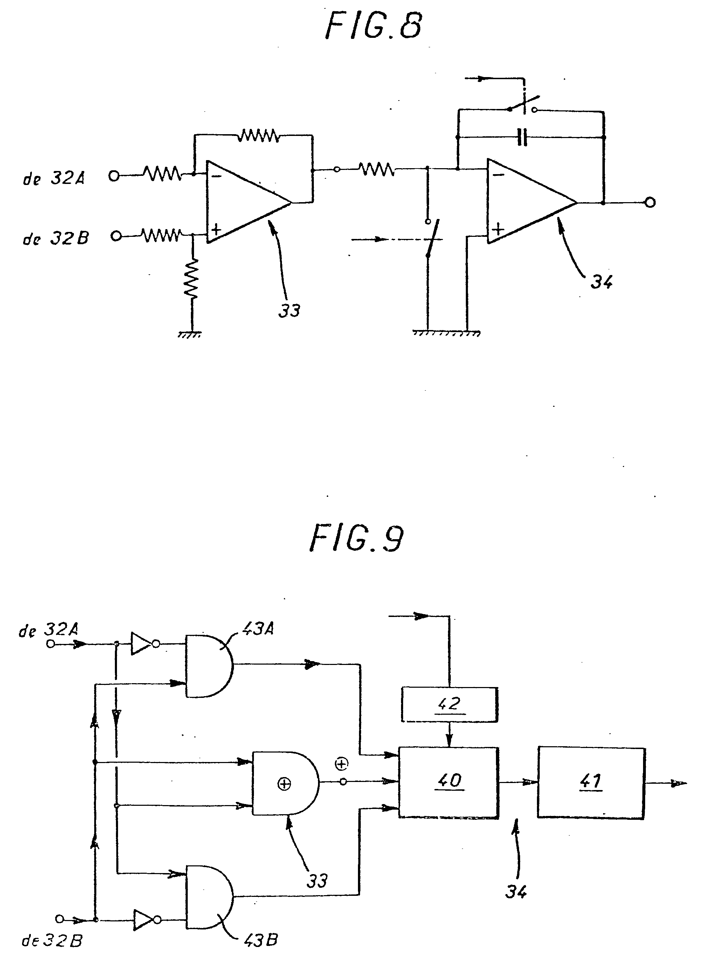

Les figures 6 à 9 illustrent des modalités pratiques de réalisation propres à un tel asservissement, lorsque l'écart pris en considération est un écart de temps d'arrivée.

Tel qu'illustré par le schéma bloc de la figure 6, les signaux reçus par les transducteurs 27A, 27B de l'engin suiveur 13 sont transmis, sous le contrôle d'une porte analogique 31A, 31B, à un amplificateur de mise en forme 32A, 32B, avant d'être adressés conjointement, et successivement, à un organe de mixage 33, à un intégrateur 34, et à un amplificateur de puissance 35 dont la sortie pilote le moteur de propulsion 22 de l'engin suiveur 13.

Les portes analogiques 31A, 31B sont pilotées par un bloc logique de contrôle commun 36 de manière à ce que ne soit prise en compte, pour chaque impulsion sonore émise par le transducteur 26 de l'organe opérateur 10, que la première des impulsions sonores arrivant au transducteur 27A, 27B de l'engin suiveur 13.

Suivant des modalités qui relèvent de l'homme de métier, ce bloc logique de contrôle 36 est donc propre à fournir aux portes analogiques 31A, 31B un créneau d'ouverture CP déterminé.

Il est également adapté à fournir une impulsion de remise à zéro RAZ aux amplificateurs de mise en forme 32A, 32B.

Le diagramme de la figure 7 donne à titre d'exemple l'allure des signaux correspondants, dont l'unité d'amplitude est quelconque.

Sur ce diagramme sont schématisés, aux lignes A, B, les signaux reçus par les transducteurs 27A, 27B et transmis par ceux-ci aux portes analogiques 31A, 31B, à la ligne CP le créneau d'ouverture appliqué à celles-ci, aux lignes 32A, 32B les tensions de sortie des amplificateurs de mise en forme 32A, 32B, à la ligne 33 la tension de sortie de l'organe de mixage 33, et, aux lignes 34+, 34−, la tension de sortie de l'intégrateur 34, suivant, respectivement, le signe, positif ou négatif, de l'écart de temps d'arrivée entre les signaux reçus par les transducteurs 27A, 27B.

Quel que soit ce signe, la tension finale de sortie de l'intégrateur 34 est proportionnelle à l'écart en question.

Le moteur de propulsion 22 de l'engin suiveur 13 est donc commandé à raison d'un tel écart, et, par annulation de cet écart, il impose à l'engin suiveur 13 de suivre à tout instant l'engin opérateur 10; autrement dit, l'abscisse X de l'engin suiveur, qui est mesurée par ailleurs, comme mentionné ci-dessus, se trouve maintenue égale à l'abscisse $X_0$ de l'engin opérateur, et celle-ci est donc connue par la mesure de la précédente.

La réalisation pratique des divers constituents mentionnés ci-dessus relève de l'homme de métier et peut recouvrir des modalités d'exécution diverses.

Par exemple, s'agissant de l'organe de mixage 33, et de l'intégrateur 34, une réalisation analogique peut être envisagée, telle qu'illustrée par la figure 8: un opérateur opérationnel monté en soustracteur constitue l'organe de mixage 33, et un opérateur opérationnel monté en intégrateur constitue l'intégrateur 34.

En variante, et tel qu'illustré par la figure 9, une réalisation numérique est possible: l'organe de mixage 33 est constitué par une porte analogique, et l'intégrateur 34 est constitué par un compteur décompteur 40 et un convertisseur numérique analogique 41, le compteur décompteur 40 étant piloté par une horloge 42 et par les portes analogiques 43A, 43B recevant individuellement les tensions des sortie des amplificateurs de mise en forme 32A, 32B.

Ces dispositions relevant de l'homme de métier, elles ne seront pas décrites plus en détail ici.

Dans tous les case, la chaîne d'asservissement électromécanique, mise en oeuvre, fixe le sens de rotation du moteur de propulsion 22 de l'organe suiveur 13, pour un sens de déplacement de celui-ci de nature à annuler l'écart qui en forme l'élément d'entrée, comme mentionné ci-dessus.

Si le moteur de propulsion 22 est un moteur hydraulique, des relais sont mis en oeuvre, suivant des modalités usuelles en la matière.

Conjointement, pour la constitution de moyens de détection propres à relever la distance transversale Y entre l'engin opérateur 10 et l'engin suiveur 13, le transducteur 26 dont est doté l'engin opérateur 10 est non seulement émetteur, mais encore récepteur, pour réception de l'echo de ses propres impulsions sonores, entre deux émissions, et ainsi détermination de la distance transversale Y recherchée.

De préférence, les transducteurs 27A, 27B de l'engin suiveur 13 sont réglables en écartement, suivant des modalités qui relèvent de l'homme de métier.

Ainsi l'écartement *l* entre ces transducteurs peut avantageusement être ajusté de manière à ce que les conditions de détection soient optimales, compte tenu de la distance transversale relevée entre l'engin opérateur 10 et l'engin suiveur 13; un tel ajustement peut être automatique.

En pratique, on choisit pour lignes de déplacement concomitantes de l'engin opérateur 10 et de l'engin suiveur 13 des lignes parallèles, par exemple droites, en maintenant constante la distance transversale Y entre l'engin opérateur 10 et l'engin suiveur 13 tout au long d'un déplacement longitudinal de cet engin opérateur, et en modifiant cette distance transversale d'un déplacement longitudinal de l'engin opérateur 10 à un autre.

De préférence, et suivant des modalités qui, relevant de l'homme de métier, ne sont pas représentées, le transducteur 26 de l'engin opérateur 10 est rotatif et est asservi en positionnement à un capteur, gyromètre par exemple, apte à en maintenir la face active en direction de l'engin suiveur 13.

Mais il peut cependant arriver que, au cours d'une opération de contrôle, l'engin opérateur 10 perde le contact avec l'engin suiveur 13, notamment lorsque les impulsions ultrasonores transitant entre ces engins doivent traverser une zone de turbulence, et par exemple une zone de turbulence due à une sortie d'eau.

On peut alors envisager de faire décrire systématiquement à l'engin opérateur 10 un mouvement de translation, parallèlement à la ligne de référence 14 sur laquelle se trouve l'engin suiveur 13; en effet, l'engin opérateur 10 se retrouve alors immanquablement à un instant donné au droit de l'engin suiveur 13, et la poursuite, par celui-ci, de l'engin opérateur 10 peut reprendre.

Mais il s'agit là d'une solution exigeant un temps de recherche non négligeable.

Pour diminuer ce temps de recherche, le transducteur 26 de l'engin opérateur 10 est de préférence à directivité toroïdale et apte à émettre des ondes omnidirectionnelles dans le plan, les transducteurs 27A, 27B de l'engin suiveur 13 étant conjointement montés chacun rotatif.

En cas de perte de contact, ces transducteurs 27A, 27B se mettent automatiquement à tourner sur leur axe, pour recherche de l'engin opérateur 10, et, après reprise de contact, l'engin suiveur 13 se trouve automatiquement ramené au doit de l'engin opérateur 10, à l'aide de chaînes d'asservissement appropriées.

Dans tous les cas, l'engin opérateur 10 est, de préférence, doté d'un moyen d'alarme, acoustique ou visuel, non représenté sur les figures, qui entre en action lors d'une perte de contact, et signale ainsi celle-ci au servant de cet engin opérateur.

Ce moyen d'alarme est piloté, par exemple, par les moyens de détection et/ou d'asservissement intervenant entre l'engin opérateur et l'engin suiveur.

Suivant un autre aspect de l'invention, l'engin suiveur 13 constitue un relais pour les arrivées en énergie et les retours de signaux en surface.

De la sorte, l'engin opérateur 10 n'est tributaire que d'une liaison modérée en câbles et/ou tubulures avec l'engin suiveur 13, ce qui limite considérablement les sollicitations de traînée dont est l'objet cet engin opérateur de la part d'une telle liaison et le rend ainsi plus manoeuvrant.

Conjointement, c'est l'engin suiveur qui encaisse l'essentiel de la liaison en câbles et/ou tubulures nécessaire aux raccordements de surface, mais sans répercussion sur l'engin opérateur 10.

De même, l'engin suiveur 13 peut avantageusement comporter une centrale hydraulique propre à la desserte de l'engin opérateur 10.

Bien entendu la présente invention n'est pas limitée aux modes de mise en oeuvre décrits et représentés, mais englobe toute variante d'exécution.

Par exemple, il n'est pas nécessaire que les lignes suivant lesquelles se déplace l'engin opérateur et/ou l'engin suiveur soient droites; il pourrait au contraire s'agir de lignes courbes.

De même, il n'est pas nécessaire que ces lignes soient parallèles entre elles; il suffit en effet de relever à tout instant la distance transversale entre engins.

D'ailleurs, s'agissant du contrôle de la coque d'un navire, il n'est pas nécessaire non plus que la ligne de référence à parcourir par l'engin suiveur suivant l'invention soit un arête fondmuraille d'une telle coque.

D'autres lignes de référence peuvent être envisagées.

Par exemple, un câble peut être tendu entre deux bornes établies à distance l'une de l'autre.

De même une glissière peut être rapportée sur la coque à contrôler, par exemple par des moyens de fixation magnétiques.

Une telle glissière pourrait également être fixée à demeure dès l'origine sur une telle coque.

La ligne de référence se trouve ainsi matérialisée.

Mais, elle pourrait être également immatérielle, l'engin suiveur se dirigeant vers une balise ultra-sonore émettrice, et étant asservi en déplacement à la direction correspondante par une dipôle de transducteurs ultra-sonores récepteurs du type de celui décrit ci-dessus.

Ainsi, il n'est pas nécessaire que l'engin suiveur ait globalement, en élévation de côté, une configuration en L.

Il peut au contraire se déplacer à plat sur le fond, ou une muraille, du navire à contrôler.

Le domain d'application de l'invention n'est pas d'ailleurs limité au seul contrôle d'un tel navire; il s'étend au contraire au contrôle de toute structure immergée.

De manière plus générale, il s'étend au repérage en position d'un quelconque engin opérateur appelé à se déplacer sur une quelconque structure immergée, quelle que soit la fonction qu'a à assumer cet engin opérateur.

Au lieu d'une fonction de contrôle, il pourrait aussi bien s'agir d'une quelconque fonction de traitement, nettoyage et/ou peinture par exemple.

Enfin, suivant un développement de l'invention, une automatisation complète du procédé de repérage décrit ci-dessus peut être envisagée.

Seule suffirait dans ce cas une surveillance par plongeur de l'engin opérateur.

Cet engin opérateur serait alors manoeuvré de la surface, à partir d'un pupitre de contrôle, le chemin qu'il parcourt pouvant être visualisé sur une table traçante par exemple, et sa position être repérée, comme ci-dessus, à l'aide de l'engin suiveur suivant l'invention.

**Revendications**

1. Procédé pour le repérage en position d'un engin autonome, dit ci-après engin opérateur, appelé à se déplacer sur une structure immergée, telle que navire à flot, suivant une ligne de déplacement quelconque, caractérisé en ce que on associe audit engin opérateur (10) un engin suiveur (13), on repère à tout instant la position longitudinale (X) dudit engin suiveur le long d'une ligne de déplacement (14) choisie comme ligne de référence, on établit un asservissement relatif en déplacement longitudinal de l'engin opérateur et de l'engin suiveur le long de leurs lignes de déplacement respectives, et on relève à tout instant la distance transversale (Y) entre lesdits engins.

2. Procédé suivant la revendication 1, caractérisé en ce que c'est l'engin suiveur (13) qu'on asservit en déplacement longitudinal à l'engin opérateur (10).

3. Procédé suivant la revendication 2, caractérisé en ce que l'asservissement en déplacement de l'engin suiveur (13) à l'engin opérateur (10) se fait en dotant l'engin opérateur (10) d'un transducteur ultra-sonore émetteur (26), en dotant l'engin suiveur de deux transducteurs ultra-sonores récepteurs (27A—27B) montés en dipôle parallèlement à la ligne de déplacement (14), en relevant l'écart éventuel de temps d'arrivée ou de niveau entre les signaux reçus par lesdits transducteurs récepteurs en provenance dudit transducteur émetteur, et en commandant en déplacement l'engin suiveur, dans un sens ou dans l'autre, à raison dudit écart.

4. Procédé suivant la revendication 3, caractérisé en ce que, pour la mesure de la distance transversale (Y) entre les engins (10, 13), le transducteur (26) dont est doté l'engin opérateur (10) est également récepteur.

5. Procédé suivant l'une quelconque des revendications 1 à 4, caractérisé en ce que, pour repérer la position longitudinale de l'engin suiveur (13) le long de sa ligne de déplacement (14), on dote cet engin suiveur (13) d'un transducteur ultra-sonore émetteur récepteur (24), et on dispose, en un point quelconque de ladite ligne de déplacement (14), choisi pour point origine, un réflecteur (25) apte à renvoyer en direction dudit engin suiveur (13) les signaux émis par le transducteur émetteur récepteur (24) de celui-ci.

6. Procédé suivant l'une quelconque des revendications 1 à 5, caractérisé en ce que, la structure immergée concernée étant la coque d'un navire, on choisit pour ligne de déplacement de référence pour l'engin suiveur (13), l'une des arêtes fond-murailles (14) d'une telle coque.

7. Procédé suivant la revendication 6, caractérisé en ce qu'on donne à l'engin suiveur (13) une configuration en L pour qu'il porte, d'une part sur le fond (11) du navire concerné, et, d'autre part, sur l'une des murailles (12) de celui-ci.

8. Procédé suivant l'une quelconque des revendications 1 à 7, caractérisé en ce que on utilise l'engin suiveur (13) comme relais pour les arrivées en énergie et les retours de signaux en surface, et on dote, si nécessaire, cet engin suiveur (13) d'une centrale hydraulique.

9. Procédé suivant l'une quelconque des revendications 1 à 8, caractérisé en ce que on choisit pour lignes de déplacement concomitantes de l'engin opérateur (10) et de l'engin suiveur (13) des lignes parallèles, par exemple droites, en maintenant une distance transversale constante entre l'engin opérateur (10) et l'engin suiveur (13), et on modifie cette distance transversale d'un déplacement longitudinal de l'engin opérateur (10) à un autre.

10. Dispositif propre au repérage en position d'un engin autonome (10), dit ci-après engin opérateur, appelé à se déplacer sur une structure immergée, telle que navire à flot, suivant une ligne de déplacement quelconque, caractérisé en ce qu'il comporte un engin suiveur (13) monté mobile suivant une ligne de déplacement (14) choisie comme ligne de référence, des moyens de détection (24, 25) propres à relever la position longitudinale (X) de l'engin suiveur (13) sur sa ligne de déplacement (14), des moyens d'asservissement (26, 27A—27B) propres à lier en déplacement longitudinal l'engin suiveur (13) et l'engin opérateur (10) le long de leurs lignes de déplacement respectives, et des moyens de détection (26, 27A—27B) propres à relever la distance transversale (Y) entre l'engin opérateur (10) et l'engin suiveur (13).

11. Un dispositif suivant la revendication 10, caractérisé en ce que les moyens de détection propres à relever la position longitudinale de l'engin suiveur (13) sur sa ligne de déplacement comportent un transducteur ultra-sonore émetteur récepteur (24) porté par cet engin suiveur (13) et un réflecteur (25) porté par la structure immergée, ledit réflecteur (25) étant placé en un point quelconque de la ligne de déplacement (14) de l'engin suiveur (13) choisi comme point origine.

12. Dispositif suivant la revendication 10, caractérisé en ce que les moyens d'asservissement propres à lier en déplacement longitudinal l'engin suiveur et l'engin opérateur le long de leurs lignes de déplacement respectives comportent un transducteur ultra-sonore émetteur (26) porté par l'engin opérateur (10), deux transducteurs ultra-sonores récepteurs (27A—27B) montés en dipôle sur l'engin suiveur (13) parallèlement à sa ligne de déplacement (14), et des moyens de propulsion (22) équipant cet engin suiveur (13), lesdits moyens de propulsion (22) étant pilotés par des moyens de commande sensibles à l'écart éventuel de temps d'arrivée ou de niveau entre les signaux reçus par lesdits transducteurs récepteurs en provenance dudit transducteur émetteur.

13. Dispositif suivant la revendication 12, caractérisé en ce que les transducteurs récepteurs (27A—27B) de l'engin suiveur (13) sont réglables en écartement.

14. Dispositif suivant l'une quelconque des revendications 12, 13, caractérisé en ce que les transducteurs récepteurs (27A—27B) de l'engin suiveur (13) sont rotatifs, pour recherche éventuelle de l'engin opérateur.

15. Dispositif suivant la revendication 12, caractérisé en ce que le transducteur émetteur (26) de l'engin opérateur (10) est à directivité toroïdale et est apte à émettre des ondes omnidirectionnelles dans le plan.

16. Dispositif suivant la revendication 12, caractérisé en ce que le transducteur émetteur (26) de l'engin opérateur (10) est rotatif et est asservi en positionnement à un capteur tel que gyromètre par exemple.

17. Dispositif suivant la revendication 12, caractérisé en ce que, pour la constitution de moyens de détection propres à relever la distance transversale (Y) entre l'engin opérateur et l'engin suiveur, le transducteur (26) porté par l'engin opérateur (10) est non seulement émetteur mais encore récepteur.

18. Dispositif suivant l'une quelconque des revendications 10 à 17, caractérisé en ce que il comporte un moyen d'alarme, acoustique ou visuel, monté sur l'engin opérateur (10), et piloté par les moyens de détection et/ou d'asservissement intervenant entre l'engin opérateur (10) et l'engin suiveur (13).

19. Dispositif suivant l'une quelconque des revendications 10 à 18, caractérisé en ce que l'engin suiveur (13) constitue un relais pour les arrivées en énergie et les retours de signaux vers la surface et est éventuellement équipé d'une centrale hydraulique.

20. Dispositif suivant l'une quelconque des revendications 10 à 19, caractérisé en ce que l'engin suiveur (13) a globalement une configuration en dièdre, par exemple en L, pour adaptation à deux surfaces de déplacement formant elles-mêmes un dièdre.

**Patentansprüche**

1. Verfahren zum Orten eines selbständigen Geräts, nachfolgend als Operatoreinheit bezeichnet, das zum sich Fortbewegen an einer eingetauchten Unterwasserstruktur, z.B. einem Hochseeschiff, entlang einer beliebigen Bahnlinie angesteuert wird, dadurch gekennzeichnet, daß man der Operatoreinheit (10) eine Nachführeinheit (13) zuordnet, zu jeder Zeit die Lage (X) der Nachführeinheit in Längsrichtung entlang einer als Referenzlinie ausgewählten Bahnlinie lokalisiert, eine Relativsteuerung zur Längsbewegung der Operator- und der Nachführeinheit entlang ihrer jeweiligen Bahnlinien vorsieht, und daß man zu jeder Zeit den Querabstand (Y) zwischen den beiden Einheiten feststellt.

2. Verfahren nach Anspruch 1, dadurch gekennzeichnet, daß es die Nachführeinheit (13) ist, die man bezüglich ihrer Bewegung in Längsrichtung zu der Operatoreinheit (10) steuert.

3. Verfahren nach Anspruch 2, dadurch gekennzeichnet, daß die Steuerung der Nachführeinheit (13) zur Operatoreinheit (10) dadurch bewerkstelligt wird, daß auf der Operatoreinheit ein Ultraschall-Sender-Wandler (26) und auf der Nachführeinheit zwei Ultraschall-Empfänger-Wandler (27a, 27b) vorgesehen sind, welche letztere dipolartig parallel zur Bahnlinie (14) angeordnet sind, indem man die eventuelle Abweichung der Eingangszeiten oder des Niveaus zwischen den von dem genannten Sender-Wandler abgegebenen und durch die genannten Empfänger-Wandler aufgenommenen Signale feststellt, und aufgrund dieser Abweichung eine Bahnbewegung der Nachführeinheit in die eine oder andere Richtung bewirkt.

4. Verfahren nach Anspruch 3, dadurch gekennzeichnet, daß zum Messen des Querabstands (Y) zwischen den beiden Einheiten (10, 13) der Wandler (26), mit dem die Operatoreinheit (10) versehen ist, gleichzeitig Empfänger ist.

5. Verfahren nach mindestens einem der Ansprüche 1 bis 4, dadurch gekennzeichnet, daß auf der Nachführeinheit (13) zum Orten der Position in Längsrichtung entlang ihrer Bahnlinie (14) ein Ultra-Schall-Sender-Empfänger-Wandler (24) vorgesehen ist, und daß an einem beliebigen Punkt der Bahnlinie (14), der als Ursprungspunkt gewählt ist, ein Reflektor (25) angeordnet wird, der die von dem Sender-Empfänger-Wandler (24) ausgesendeten Signale in Richtung auf die Nachführeinheit (13) zurückstrahlt.

6. Verfahren nach mindestens einem der Ansprüche 1 bis 5, dadurch gekennzeichnet, daß man als Referenzbahnlinie der Nachführeinheit (13) eine der Kanten Bodenfläche-Schiffswand (14) wählt, wenn es sich bei der betreffenden Unterwasserstruktur um einen Schiffsrumpf handelt.

7. Verfahren nach Anspruch 6, dadurch gekennzeichnet, daß man der Nachführeinheit (13) eine L-förmige Konfiguration gibt, die sich zum einen an dem Boden (11) des Schiffs und zum anderen an einer Schiffswand (12) abstützt.

8. Verfahren nach mindestens einem der Ansprüche 1 bis 7, dadurch gekennzeichnet, daß die Nachführeinheit (13) als Relais für die Energiezuführung und die Rückführung von Signalen zur Oberfläche dient, und daß man, falls erforderlich, diese Nachführeinheit mit einer Hydraulikanlage ausrüstet.

9. Verfahren nach mindestens einem der Ansprüche 1 bis 8, dadurch gekennzeichnet, daß man als begleitende Bahnlinien für die Operatoreinheit (10) und die Nachführeinheit (13) parallele Linien z.B. geradlinige, auswählt, indem man einen konstanten Querabstand zwischen der Operatoreinheit (10) und der Nachführeinheit (13) aufrecht erhält und daß man diesen Querabstand von einer Längsverschiebung der Operatoreinheit (10) zur anderen verändert.

10. Vorrichtung zum Orten eines selbständigen Geräts, nachfolgend als Operatoreinheit bezeichnet, die zum Fortbewegen an einer eingetauchten Unterwasserstruktur, z.B. einem Hochseeschiff, entlang einer beliebigen Bahnlinie angesteuert wird, dadurch gekennzeichnet, daß eine entlang einer als Referenzlinie ausgewählte Bahnlinie (14) bewegbar angeordnete Nachführeinheit (13), Erfassungsmittel (24, 25) zum Orten der Längsposition (X) der Nachführeinheit auf ihrer Bahnlinie (14), Steuermittel (26, 27A—27B) zum längswegmäßigen Verbinden der Nachführeinheit, und der Operatoreinheit entlang ihrer jeweiligen Bahnlinien, und Erfassungsmittel (26, 27A—27B) zum Feststellen der Querdistanz (Y) zwischen der Operatoreinheit (10) und der Nachführeinheit (13) vorgesehen sind.

11. Vorrichtung nach Anspruch 10, dadurch gekennzeichnet, daß die Erfassungsmittel zum Orten der Längsposition der Nachführeinheit (13) auf ihrer Bahnlinie einen von der Nachführeinheit (13) getragenen Ultraschall-Sender-Empfänger-Wandler (24) und einen auf der Unterwasserstruktur angeordneten Reflektor (25) umfassen, wobei der Reflektor an einem beliebigen Punkt der Bahnlinie (14) der Nachführeinheit (13) angeordnet ist, der als Anfangspunkt ausgewählt ist.

12. Vorrichtung nach Anspruch 10, dadurch gekennzeichnet, daß die Steuermittel zum längswegmäßigen Verbinden der Nachführeinheit und der Operatoreinheit entlang ihrer jeweiligen Bahnlinien einen von der Operatoreinheit (10) getragenen Ultraschall-Sender-Wandler (26), zwei dipolartig parallel zu ihrer Weglinie (14) auf der Nachführeinheit (13) befestigte Ultraschall-Empfänger-Wandler (27A—27B), und auf dieser Nachführeinheit (13) angeordnete Antriebsmittel (22) umfassen, wobei die Antriebsmittel über Steuermittel gesteuert werden, die auf einen eventuellen Abstand in der Zeit oder in dem Niveau der von dem Sender-Wandler ausgesandten und von dem Empfänger-Wandlern aufgenommenen Signale ansprechen.

13. Vorrichtung nach Anspruch 12, dadurch gekennzeichnet, daß die Empfänger-Wandler (27A—27B) der Nachführeinheit (13) im Abstant einstellbar sind.

14. Vorrichtung nach Anspruch 12 oder 13, dadurch gekennzeichnet, daß die Empfänger-Wandler (27A—27B) der Nachführeinheit (13) zum eventuellen Aufsuchen der Operatoreinheit drehbar sind.

15. Vorrichtung nach Anspruch 12, dadurch gekennzeichnet, daß der Sender-Wandler (26) der Operatoreinheit (10) eine toroidische Richtcharakteristik aufweist, und fähig ist, omnidirektionale Wellen in der Ebene auszusenden.

16. Vorrichtung nach Anspruch 12, dadurch gekennzeichnet, daß der Sender-Wandler (26) der Operatoreinheit (10) drehbar ist und lagemäßig von einem Stellungsgeber, wie z.B. ein Gyrometer, gesteuert wird.

17. Vorrichtung nach Anspruch 12, dadurch gekennzeichnet, daß für die Konstitution der Erfassungsmittel zum Feststellen der Querdistanz (Y) zwischen der Operatoreinheit und Nachführeinheit der von der Operatoreinheit (10) getragene Wandler (26) nicht nur Sender sondern auch Empfänger ist.

18. Vorrichtung nach mindestens einem der Ansprüche 10 bis 17, dadurch gekennzeichnet, daß akustische oder visuelle, auf der Operatoreinheit (10) angeordnete Alarmmittel vorgesehen sind, die von den Erfassungsmitteln und/oder den Steuermitteln gesteuert werden, welche zwischen der Operatoreinheit (10) und der Nachführeinheit (13) einwirken.

19. Vorrichtung nach mindestens einem der Ansprüche 10 bis 18, dadurch gekennzeichnet, daß die Nachführeinheit (13) ein Relais für die Energiezuführung und die Rückführung von Signalen zur Oberfläche bildet, und daß sie eventuell mit einer Hydraulikanlage ausgerüstet ist.

20. Vorrichtung nach mindestens einem der Ansprüche 10 bis 19, dadurch gekennzeichnet, daß die Nachführeinheit (13) im wesentlichen den Aufbau eines Dieders aufweist, bespielsweise L-förmig, damit er sich an zwei Verschiebungsoberflächen anpasst, welche selber ein Dieder bilden.

**Claims**

1. Method of locating the position of a self-propelled machine, called hereinafter an operating machine, which is made to move on an immersed structure, such as a floating ship, along any line of displacement characterised in that a following machine (13) is associated with the said operating machine (10), the longitudinal position (X) of the said following machine along a line of displacement (14) selected as a reference line is identified at every moment, a relative servo-control between the operating machine and the following machine in terms of longitudinal displacement is provided along their respective lines of displacement and the transverse distance (Y) between the said machines is recorded at every moment.

2. Method according to Claim 1, characterised in that the following machine (13) is servo-controlled in terms of longitudinal displacement by the operating machine (10).

3. Method according to Claim 2, characterised in that the following machine (13) is servo-controlled in terms of displacement by the operating machine (10) by providing the operating machine (10) with an ultrasonic transmitting transducer (26), providing the following machine with two ultrasonic receiving transducers (27A, 27B) arranged in a dipole connection parallel to the line of displacement (14), recording the possible variation in time of arrival or level between the signals received by the said receiving transducers and coming from the said transmitting transducer, and controlling the displacement of the following machine in one direction or the other in proportion to the said variation.

4. Method according to Claim 3, characterised in that for measuring the transverse distance (Y) between the machines (10, 13) the transducer (26) with which the operating machine (10) is provided is also a receiver.

5. Method according to any one of Claims 1 to 4, characterised in that, to identify the longitudinal position of the following machine (13) along its line of displacement (14), this following machine (13) is provided with an ultrasonic transmitting/receiving transducer (24), and located at any point on the said line of displacement (14), chosen as a starting point, is a reflector (25) which is designed to return in the direction of the said following machine (13) the signals transmitted by the transmitting/receiving transducer (24) of the latter.

6. Method according to any one of Claims 1 to 5, characterised in that, the immersed structure in question being the hull of a ship, one of the bottom side edges (14) of such a hull is chosen as the reference line of displacement for the following machine (13).

7. Method according to Claim 6, characterised in that an L-shaped form is given to the following machine (13), so that it bears, on the one hand, on the bottom (11) of the ship in question and, on the other hand, on one of the sides (12) of the latter.

8. Method according to any one of Claims 1 to 7, characterised in that the following machine (13) is used as a relay for the supply of power and the return of signals to the surface, and, if necessary, this following machine (13) is provided with a hydraulic generating unit.

9. Method according to any one of Claims 1 to 8, characterised in that parallel lines, for example straight lines, are chosen as concomitant lines of displacement of the operating machine (10) and the following machine (13), a constant transverse distance being maintained between the operating machine (10) and the following machine (13), and this transverse distance is modified from one longitudinal displacement of the operating machine (10) to another.

10. Apparatus suitable for locating the position of a self-propelled machine (10), called hereinafter an operating machine, which is made to move on an immersed structure, such as a floating ship, along any line of displacement, characterised in that it comprises a following machine (13) mounted so as to be movable along a line of displacement (14) chosen as a reference line, detection means (24, 25) suitable for recording the longitudinal position (X) of the following machine (13) on its line of displacement (14), servo-control means (26, 27A and 27B) suitable for linking the longitudinal displacement of the following machine (13) and of the operating machine (10) along their respective lines of displacement and detection means (26, 27A and 27B) suitable for recording the transverse distance (Y) between the operating machine (10) and the following machine (13).

11. Apparatus according to Claim 10, characterised in that the detection means suitable for recording the longitudinal position of the following machine (13) on its line of displacement comprise an ultrasonic transmitting/receiving transducer (24) carried by this following machine (13), and a reflector (25) carried by the immersed structure, the said reflector (25) being located at any point on the line of displacement (14) of the following machine (13) chosen as a starting-point.

12. Apparatus according to Claim 10, characterised in that the servo-control means suitable for linking the longitudinal displacement of the following machine and of the operating machine along their respective lines of displacement comprise an ultrasonic transmitting transducer (26) carried by the operating machine (10) two ultrasonic receiving transducers (27A and 27B) arranged in a dipole connection on the following machine (13) parallel to its line of displacement (14), and drive means (22) equipping this following machine (13), the said drive means (22) being controlled by control means sensitive to the possible variation in the time of arrival or level between the signals received by the said receiving transducers and coming from the said transmitting transducer.

13. Apparatus according to Claim 12, characterised in that the distance between the receiving transducers (27A and 27B) of the following machine (13) is adjustable.

14. Apparatus according to either one of Claims 12, 13 characterised in that the receiving transducers (27A and 27B) of the following machine (13) are rotary for the purpose of a possible search for the operating machine.

15. Apparatus according to Claim 12, characterised in that the transmitting transducer (26) of the operating machine (10) has toroidal directivity and is designed to transmit plane omnidirectional waves.

16. Apparatus according to Claim 12, characterised in that the transmitting transducer (26) of the operating machine (10) is rotary and is servo-controlled in terms of positioning by a sensor such as, for example, a gyrometer.

17. Apparatus according to Claim 12, characterised in that, to provide detection means suitable for recording the transverse distance (Y) between the operating machine and the following machine, the transducer (26) carried by the operating machine (10) is not only a transmitter, but also a receiver.

18. Apparatus according to any one of Claims 10 to 17, characterised in that it comprises an acoustic or visual alarm means mounted on the operating machine (10) and controlled by the detection and/or servo-control means which take effect between the operating machine (10) and the following machine (13).

19. Apparatus according to any one of Claims 10 to 18, characterised in that the following machine (13) constitutes a relay for the supply of power and the return of signals to the surface and is, if appropriate, equipped with a hydraulic generating unit.

20. Apparatus according to any one of Claims 10 to 19, characterised in that the following machine (13) has substantially a dihedral form, for example an L-shaped form, to fit to surfaces of displacement which themselves form a dihedron.

FIG.1

0011574

FIG.2

FIG.3

FIG.4

**0011 574**

FIG.5

FIG.6

FIG.7

# FIG.8

de 32A

de 32B

33

34

# FIG.9

de 32A

43A

42

40

41

33

34

de 32B

43B